(19)

Europäisches
Patentamt
European
Patent Office
Office européen
des brevets

(11)     **EP 1 829 265 B1**

(12)     **EUROPEAN PATENT SPECIFICATION**

| | |
|---|---|
| (45) Date of publication and mention of the grant of the patent: **13.02.2013 Bulletin 2013/07** | (51) Int Cl.: ***H04L 1/16*** *(2006.01)* |
| (21) Application number: **05823922.9** | (86) International application number: **PCT/EP2005/013691** |
| (22) Date of filing: **20.12.2005** | (87) International publication number: **WO 2006/066861 (29.06.2006 Gazette 2006/26)** |

(54) **ACK/NACK DETECTION IN WIRELESS COMMMUNICATION**

ACK/NACK-DETEKTION BEI DER DRAHTLOSEN KOMMUNIKATION

DETECTION D'ACCUSE DE RECEPTION (ACK/NACK) DANS UNE COMMUNICATION SANS FIL

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.12.2004 US 19333**

(43) Date of publication of application:
**05.09.2007 Bulletin 2007/36**

(73) Proprietor: **Telefonaktiebolaget L- M Ericsson (publ)**
**164 83 Stockholm (SE)**

(72) Inventors:
• **LINDOFF, Bengt**
  **S-237 36 Bjärred (SE)**
• **NILSSON, Johan**
  **S-236 38 Höllviken (SE)**
• **MALM, Peter**
  **S-226 48 Lund (SE)**

(74) Representative: **Åkerman, Mårten Lennart et al**
**Ericsson AB**
**Patent Unit Mobile Platforms**
**Nya Vattentornet**
**221 83 Lund (SE)**

(56) References cited:
**EP-A- 1 326 361     US-A1- 2003 099 211**
**US-B1- 6 711 150**

EP 1 829 265 B1

Description

<u>TECHNICAL FIELD</u>

The present invention relates generally to modem wireless communication systems and, more particularly, to improving the acknowledgment/negative acknowledgment (ACK/NACK) detection in the transmissions of such wireless communication systems.

<u>BACKGROUND</u>

In wireless communication systems, the ACK and NACK signals are used to indicate whether a transmitted data packet has been correctly received. If it has, the receiving unit sends an ACK signal to the transmitting unit to transmit a new data block. If it has not, the receiving unit sends a NACK signal to the transmitting unit to retransmit the previous data block. In general, it is more important to correctly detect a NACK signal than an ACK signal because not detecting a NACK signal may result in errors, while not detecting an ACK signal simply results in retransmission. However, the retransmissions may result in delays at the air-interface and only a certain number of retransmissions are typically allowed per block of data over a predefined period of time for a given link.

Detection of the ACK/NACK signals is an important part of an Enhanced Uplink (E-UL) standard currently being studied by the 3rd Generation Partnership Project (3GPP). A goal of the 3GPP, which is a collaboration of wireless communication standards setting bodies, was to produce globally applicable technical specifications for 3rd generation wireless communication systems. One of the requirements of these systems is that the Enhanced Uplink provide significantly reduced air-interface delays, improved availability of high bit rates, and increased capacity, with emphasis on interactive, background (e.g., e-mail, text messaging, etc.), and streaming services.

EP 1326361 discloses a method to construct and detect a binary transmit signal. The method is based on the assumption that certain decision errors are less severe than other decision errors, as e.g. in transmission schemes employing Automatic Repeat request, ARQ. To this purpose, the important information (e.g. the acknowledgement ACK) is transmitted with high power, whereas the less important information (e.g. the non-acknowledgement NACK) is transmitted with reduced power. An asymmetric modulation scheme is obtained. The detection threshold to decide at the receiver which of the two signals was transmitted is chosen such that the reliability of a detected ACK signal is higher than that of a detected NACK signal. The scheme has the advantage that the average power consumption decreases and further that in multi-user CDMA systems the average interference is reduced.

In the Enhanced Uplink standard, the decision whether to send an ACK or a NACK signal is made by the base station on a per data packet basis. It is then up to the mobile terminal to correctly detect the ACK or a NACK signal. For example, detecting an ACK signal when in actuality a NACK signal was sent will cause packet errors on the higher layers. As a result, an entire set of data packets may need to be retransmitted instead of a single data packet (i.e., where an ACK is mistaken for a NACK), thereby increasing the air-interface delays and reducing the capacity of the uplink. For this reason, it is more important to correctly detect a NACK signal than it is to correctly detect an ACK signal during an Enhanced Uplink session.

Enhanced Uplink may also be used in soft handover situations where the mobile terminal is connected to several base stations. The set of base stations that is connected to the mobile terminal during a soft handover is called the active set. In soft handover, each base station in the active set sends its own ACK/NACK signal to the mobile station independently of other base stations. This means that there is no soft handover gain to be had for the ACK/NACK signal (unlike the case for the downlink data signals). Therefore, the signal-to-interference ratio (SIR) for the ACK/NACK signal is, on average, reduced by a factor of $n_{bs}$, where $n_{bs}$ is the number of base stations in the active set. In addition, for WCDMA (wideband code division multiple access) systems, power control is implemented on the sum of the downlinks. Consequently, the signal-to-interference ratio for certain downlinks may be very low due to independent fading of those downlinks. This raises a large risk of having an unreliable ACK/NACK signal detection during soft handover.

Furthermore, since the uplink is also power controlled in various CDMA systems (e.g., WCDMA, CDMA-2000, etc.), meaning that only the minimum amount of power necessary will be used, and since it is sufficient that only one of the base stations in the active set be connected to the mobile terminal, there is also a large risk that some of the base stations may momentarily be disconnected from the mobile terminal. When this happens, some of the data packets may not be received at all by those base stations so that no ACK/NACK signal is even sent. In that case, the mobile terminal interprets the lack of an ACK/NACK signal as a discontinuous transmission (DTX). The DTX may also occur in the single link case, but the potential for a discontinuous transmission is greater in the soft handover situation.

<u>SUMMARY</u>

The present invention is directed to a method and system for improving the ACK/NACK detection in the mobile terminal of a wireless communication system. The method and system of the invention uses knowledge about the power of the ACK/NACK signal along with the probability that a DTX will occur to increase the probability that the ACK signal will be correctly detected. The probability that a DTX will occur is determined by observing the transmit power commands issued to the mobile terminal. A high number of power up commands relative to power down commands may indicate a poor quality uplink, meaning that a DTX is likely to occur.

In general, in one aspect, the invention is directed to a method for improving detection of ACK or NACK signals in a mobile terminal. The method comprises the steps of receiving a radio signal from a base station connected to the mobile terminal that normally includes either an ACK signal or a NACK signal, and estimating a probability of a discontinuous transmission. The method further comprises the steps of calculating a minimum ACK signal threshold for the mobile terminal to correctly detect the ACK signal using the probability of the discontinuous transmission, and detecting whether the ACK signal was received or whether a NACK signal was received using the minimum ACK signal threshold.

In general, in another aspect, the invention is directed to a receiver having improved ACK or NACK signal detection in a mobile terminal of a wireless communication system. The receiver comprises a front end receiver for receiving a radio signal from a base station connected to the mobile terminal, the radio signal normally including either an ACK signal or a NACK signal. The receiver further comprises a control unit for estimating a probability of a discontinuous transmission and a threshold computation unit for calculating a minimum ACK signal threshold for the mobile terminal to correctly detect the ACK signal using the probability of the discontinuous transmission. A detector unit detects whether the ACK signal was received or whether a NACK signal was received using the minimum ACK signal threshold.

In general, in yet another aspect, the invention is directed to a method for improving detection of acknowledgment or negative acknowledgment signals in a mobile terminal at a time when the mobile terminal is connected to multiple base stations. The method comprises the step of receiving a radio signal from multiple base stations at the mobile terminal, each radio signal normally including either an acknowledgment signal or a negative acknowledgment signal. The method further comprises the step of estimating a probability of a discontinuous transmission for each one of the base stations, and calculating a minimum acknowledgment signal threshold for the mobile terminal to correctly detect the acknowledgment signal for each one of the base stations using the probability of a discontinuous transmission for a respective one of the base stations. A detection is then made as to whether the acknowledgment signal was received for each one of the base stations or whether a negative acknowledgment signal was received for each one of the base stations using the minimum acknowledgment signal threshold for a respective one of the base stations.

It should be emphasized that the term comprises/comprising, when used in this specification, is taken to specify the presence of stated features, integers, steps, or components, but does not preclude the presence or addition of one or more other features, integers, steps, components, or groups thereof.

## BRIEF DESCRIPTION OF THE DRAWINGS

The foregoing and other advantages of the invention will become apparent from the following detailed description and upon reference to the drawings, wherein:

FIGURE 1 illustrates a portion of a typical wireless communication system in which a mobile terminal may be connected to one base station or to several base stations;

FIGURES 2A-2B illustrate an exemplary ACK, NACK, and DTX implementation;

FIGURE 3 illustrates a block diagram of a system for implementing improved ACK/NACK signal detection according to embodiments of the invention; and

FIGURES 4A-4B illustrate flow diagrams of a method for implementing improved ACK/NACK signal detection according to embodiments of the invention.

## DETAILED DESCRIPTION

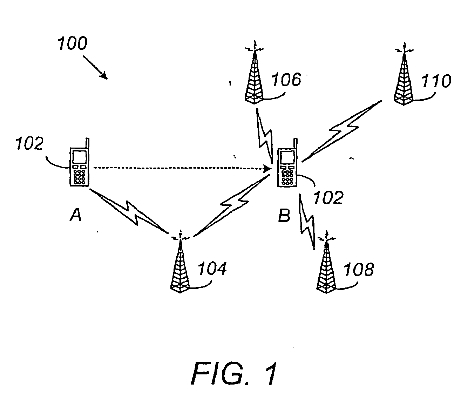

As mentioned above, embodiments of the invention provide a system and method for improved ACK/NACK signal detection in a mobile terminal. FIGURE 1 shows a portion of an exemplary wireless communication system 100 according to embodiments of the invention. The wireless communication system 100 includes a mobile terminal and several WCDMA base stations, four of which are shown here at 104, 106, 108, and 110. When the mobile terminal 102 is at location A, it can only receive signals from the first base station 104 and is therefore connected to that base station 104. However, when the mobile terminal moves to location B, it can receive signals from several additional base stations, including base stations 106, 108, and 110. The mobile terminal 102 must then determine which base station 104, 106, 108, and 110 has the strongest signal and switch to that base station. Such a process is commonly called a soft handover and refers to situations where the mobile terminal 102 is connected to the base stations 104, 106, 108, and 110 simultaneously.

For systems such as the wireless communication system 100 and other similar systems, certain requirements have been proposed for the detection of ACK/NACK in the Enhanced Uplink. Since the specific implementation (e.g., amplitude, etc.) of the ACK/NACK signal will be decided independently by each system operator, the signal requirements will be discussed herein in terms of probabilities. One requirement for implementing the Enhanced Uplink is that the probability of the mobile terminal detecting an ACK signal when a NACK signal has been transmitted, P(ACK|NACK), must be less than a certain minimum value, for example, P(ACK|NACK) = 1x10$^{-4}$. It would be useful, therefore, to provide an ACK/NACK implementation that maximizes the probability of the mobile terminal 102 detecting a true ACK signal, P(ACK|ACK), given P(ACK|NACK) = 1x10$^{-4}$. In addition, the implementation should be able to account for the probability that the mobile terminal 102 may become disconnected from the base station(s) 104, 106, 108, and/or 110 on the uplink, resulting in neither an ACK nor a NACK signal being transmitted, but rather a DTX. The mobile terminal 102 should then interpret the DTX as a NACK signal; however, the P(ACK|NACK) = 1x10$^{-4}$ should then be based on the probability of a DTX (i.e., P(ACK|DTX) = 1x10$^{-4}$). Furthermore, from a system perspective, it is important that the average power level on the ACK/NACK signals be as low as possible due to a finite amount of transmit power available at the base station (s) 104, 106, 108, and/or 110.

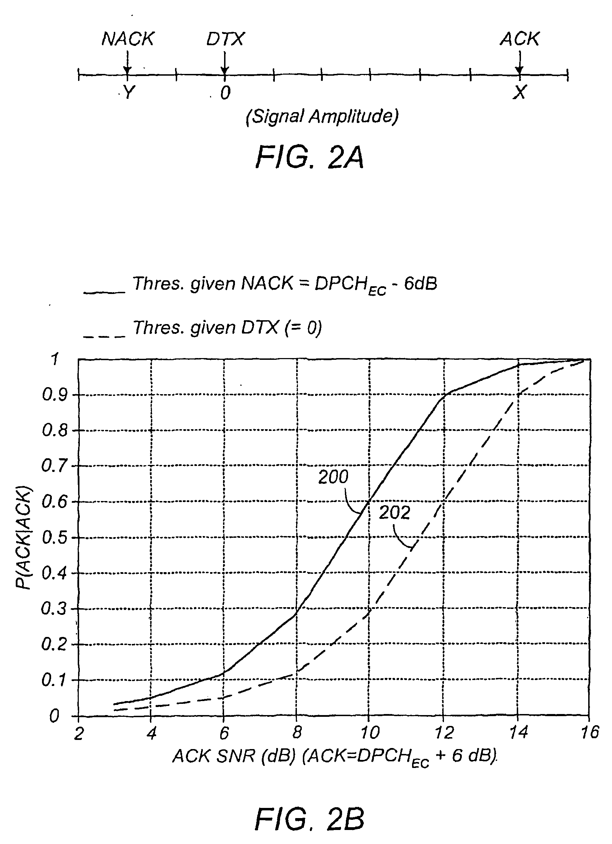

A typical prior art implementation of the ACK, NACK, and DTX is shown in FIGURE 2A, where the horizontal line represents a linear scale (e.g., signal amplitude). Ideally, the ACK signal energy should be quite high, whereas the NACK signal energy should be quite low. The DTX is by definition a lack of a signal and should therefore be at zero on the linear scale relative to the ACK and NACK signals, with the NACK signal closer to the DTX than the ACK signal. Thus, in this exemplary implementation, the ACK signal is at X on the linear scale, the DTX is at zero, and the NACK signal is at Y.

One shortcoming of the above implementation is that the ACK and NACK signals are often corrupted by noise. If the noise is sufficiently severe, the mobile terminal 102 may not be able to detect whether a NACK signal was transmitted or whether there was a DTX. To overcome this problem, some implementations set the probability P(ACK|NACK) using the DTX instead of the NACK signal, so that P(ACK|DTX) = 1x10$^{-4}$ and P(ACK|NACK) < 1x10$^{-4}$. The tradeoff for such a design choice is that the minimum threshold for the probability P(ACK|ACK) is reduced, potentially causing an increase of the number of unnecessary retransmissions and degrading the capacity and throughput of the uplink.

An example of the above degradation can be seen in FIGURE 2B, where the horizontal axis represents the signal-to-noise ratio (SNR) of the ACK signal for an ACK signal having an energy level that is 6 dB higher than the energy level of the dedicated physical channel (DPCH). In other words, $E_C^{ACK} \doteq E_C^{DPCH} + 6\,\mathrm{dB}$, where $E_C^{ACK}$ is the energy level of the ACK signal per chip and $E_C^{DPCH}$ is the energy level of the DPCH signal per chip. The vertical axis represents the probability P(ACK|ACK) of the mobile terminal 102 detecting an ACK signal given that an ACK signal was actually issued. The solid line curve 200 represents the probability of correct ACK signal detection for each link when the DTX is not taken into account (for a NACK signal that is 6 dB lower than the energy level of the DPCH signal). The dashed line 202 represents the probability of correct ACK signal detection for each link when the DTX is taken into account. As can be seen, the signal-to-noise ratio of the ACK signal has to be around 2 dB higher for the second curve 202 for the same P(ACK|ACK). That is, the ACK signal-to-noise ratio has to be higher when the mobile terminal 102 takes into account the DTX compared to when the mobile terminal does not account for DTX. Therefore, it would be desirable to provide a way to distinguish the DTX from the NACK signal whenever possible so that the ACK signal threshold may be set closer to the first curve 200.

In accordance with embodiments of the invention, the NACK signal may be distinguished from the DTX by observing the transmit power control (TPC) commands. The TPC commands are issued by the base station(s) 104, 106, 108, and/or 110 on the downlink to the mobile terminal 102 for setting the terminal output power. Such downlink TPC commands are regularly sent as part of the power control scheme in WCDMA systems, such as the system 100, to control the transmit power of the mobile terminal 102, since it is important in these systems that only the minimum amount of power necessary is transmitted. By determining the number of power "up" commands versus power "down" commands issued, an estimate of whether the uplink between the mobile terminal 102 and the base station(s) 104, 106, 108, and/or 110 is in-synch or out-of-sync. This estimate may then be used by the mobile terminal 102 to ascertain the probability that a DTX will result from the base station(s) 104, 106, 108, and/or 110.

Generally, when an uplink has adequate quality, the ratio of up/down commands is close to unity (i.e., an equal number of "up" versus "down" commands.) On the other hand, if the uplink quality is poor, the number of up commands is usually higher than the number of down commands, as the base station(s) 104, 106, 108, and/or 110 attempts to improve the quality of the link or to reestablish the link. Therefore, the ratio of up versus down commands may be used as a measure of the likelihood that the base station(s) 104, 106, 108, and/or 110 has missed a data packet and will not issue either an ACK or a NACK signal, but will instead be interpreted as a DTX. The higher the number of up commands, the larger the risk that the base station(s) 104, 106, 108, and/or 110 will result in a DTX.

The minimum threshold for the ACK signal may then be adjusted for an individual link (or for each link in the active set if in a soft handover situation) according to the likelihood of a DTX for that link, and also as a function of the ACK and NACK signal power. In one embodiment, the ACK/NACK signal power may be signaled by the base station (s) 104, 106, 108, and/or 110, for example, as an offset to the standard power controlled DPCH signal (i.e., some of the transmitted control bits may be used to indicate the ACK and NACK offset). It is also possible to estimate the ACK/NACK signal power in the mobile terminal 102. In either case, by adjusting the ACK signal threshold according to the probability of a DTX, the probability of P(ACK|ACK) may be increased while still maintaining the required probability P(ACK|NACK). As a result, the number of unnecessary retransmissions may be reduced, thereby increasing the overall capacity and throughput of the link(s).

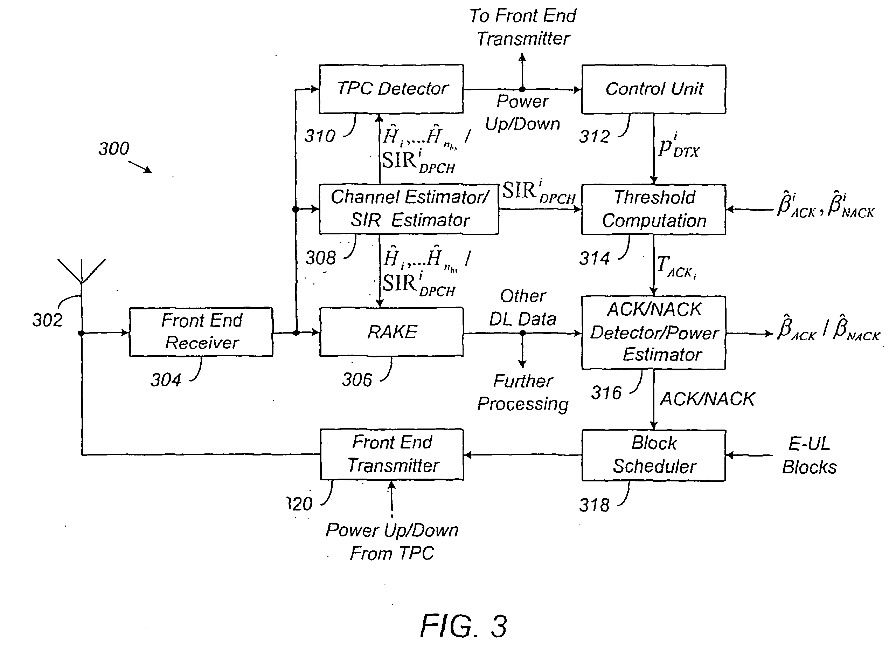

Referring now to FIGURE 3, a block diagram of a receiver portion 300 of a mobile terminal is shown that is capable of estimating the probability of a DTX and adjusting the ACK signal threshold accordingly when the mobile terminal is connected to the base station(s) in an Enhanced Uplink session. The receiver portion 300 includes a number of functional components, including an antenna 302 through which a radio signal is received and a front end receiver 304 that subsequently down-converts the radio signal to a baseband. The receiver portion 300 further includes a RAKE receiver 306 for despreading the data in the radio signal and a channel estimator/SIR estimator 308 for estimating the channel response and signal-to-interference ratio of the signal. Also present is a TPC detector 310 for detecting the transmit power commands in the radio signal and a control unit 312 for determining the probability of a DTX based on the ratio of power up versus power down commands. A threshold computation unit 314 calculates the minimum threshold for detecting the ACK signal for each link. An ACK/NACK signal detector/power offset estimator 316 determines whether the ACK/NACK signal detected is reliable. Finally, a block scheduler 318 schedules the data packets to be transmitted, whether a new data packet or a previously transmitted data packet, and a front end transmitter 320 transmits the data packets via the antenna 302. Other functional components not specifically identified herein may also be present in the receiver portion 300 without departing from the scope of the invention.

In operation, a downlink signal that may include the radio signal from a single base station, or multiple base stations if in a soft handover situation, is received through the antenna 302, along with any noise that may be present on the downlink. The radio signal is then down-converted to a baseband signal in the front end receiver 304 and fed to the channel estimator/SIR estimator 308.

The channel estimator/SIR estimator 308 uses the dedicated physical channel (DPCH) pilots to estimate the channel filter taps, $\hat{H}_i, ...\hat{H}_{nbs}$, of the DPCH along with the DPCH signal-to-noise ratio, $SIR_{DPCH}$, for each base station.

The channel filter taps may be expressed as $\hat{H}_i = [h_k^i, ...h_{L_i}^i]$ in the soft handover case, where h represents the RAKE finger $k$ for downlink $i$ and $L$ is the number of RAKE fingers for the downlink i. In the single base station, of course, there would be only a single downlink (i.e., $i = 1$). The DPCH signal-to-noise ratio may be stated as

$$SIR_{DPCH} = \hat{E}_C^{DPCH} / \hat{I}_{DPCH},$$ where $\hat{E}_C^{DPCH}$ represents the energy of the DPCH per chip and $\hat{I}_{DPCH}$ represents

the interference on the DPCH. This information is then forwarded to the RAKE receiver 306.

The RAKE receiver 306 uses the channel filter taps and the DPCH signal-to-noise ratio information to despread the data in the radio signal, including any ACK/NACK signal in the radio signal. The ACK/NACK signal output from the RAKE receiver 306 is fed to the ACK/NACK signal detector/power offset estimator 316 along with all other data output (e.g., speech/video data, web browsing data, etc.) from the RAKE receiver 306.

The channel filter taps $\hat{H}_1, ...\hat{H}_{nbs}$ and the DPCH signal-to-noise ratio $SIR_{DPCH}$ from the channel estimator/SIR estimator 308 are also provided to the TPC detector 310 for use in setting the transmit power of the mobile terminal. For each link $i$, the TPC detector 310 decodes either a power up or a power down command from the received information and provides the power up/down command to the front end transmitter 320 accordingly. The TPC detector 310 also provides the power up/down command to the control unit 312 for estimating a probability $p_{DTX}^i$ that a DTX will occur for the base station(s).

The control unit 312 may estimate the probability $p_{DTX}^i$ that a DTX will occur in a number of ways as a function of the ratio of power up to power down commands over a predetermined number of time slots $n$. In one embodiment, the control unit 312 considers the ratio $R_i$ of power up to power down commands over the last 50 to 200 time slots (i.e., $n = 50$ to $200$). The control unit 312 then defines a baseline value for the probability $p_{DTX}^i$ using the ratio $R_i$ of the base station(s) with which the mobile terminal has the highest quality uplink (i.e., smallest ratio $R_i$). For example, the baseline probability $p_{DTX}^i$ may be set as $p_{DTX}^i = 0.1$ for the base station with the smallest ratio $R_{min}$, then increased for other base stations with higher ratios $R_i$. An exemplary probability scheme for a soft handover situation is provided below:

$$p_{DTX}^i = \begin{cases} 0.2 \text{ if } (R_i < 3*R_{\min}) \\ 0.5 \text{ if } (3*R_{\min} < R_i > 10*R_{\min}) \\ 0.9 \text{ if } (R_i > 10*R_{\min}) \end{cases} \tag{1}$$

The probability values chosen in Equation (1) are based on the fact that in uplinks with high quality, power up commands make up less than 60% of the total number of power commands in soft handover, while uplinks with poor quality have close to 100% power up commands. In the case of a single base station, a somewhat different scheme may be applied due to the fact that the potential for a DTX is lower, for example:

$$p_{DTX}^i = \begin{cases} 0.1 \text{ if } R_i < 1.1 \\ 0.3 \text{ if } 1.1 < R_i > 3 \\ 0.6 \text{ if } R_i > 3 \end{cases} \tag{2}$$

The probability values shown in Equations (1) and (2) are provided as examples only and other probability values and/or ranges of values may certainly be used without departing from the scope of the invention. For example, optimized values may be provided in some cases based on system simulations or laboratory test results. Other parameters may also be predetermined and used with the probability values and/or ranges of values. These values may be calculated each time by the control unit 312 based on the ratio $R_i$, or they may be stored in a look-up table in the mobile terminal.

In embodiments where the mobile terminal includes a Doppler estimator (not shown), the values for the ratio $R_i$ as well as the number of time slots $n$ may be a function of the Doppler spread. In that case, input from the Doppler estimator may be used to adapt the values for the ratio $R_i$ and other parameters based on the speed of the mobile terminal. For example, in larger number of time slots (e.g., $n$ = 300) should be used for a slow-moving mobile terminal, whereas a smaller number of time slots should be used for a fast-moving mobile terminal (e.g., $n$ = 50). Furthermore, in the high-speed case, the values of the ratio $R_i$ should be higher than in the low-speed case due to a larger uncertainty in the power up/down estimation in the high-speed case.

The probability $p_{DTX}^i$ that a DTX will occur is then provided from the control unit 312 to the threshold computation unit 314 for determining the minimum threshold for detecting the ACK signal of each link. In one embodiment, the computation unit 314 uses the probability $p_{DTX}^i$ along with estimates of the power offsets of the ACK and NACK signals and the DPCH signal-to-noise ratio $SIR_{DPCH} = \hat{E}_C^{DPCH} / \hat{I}_{DPCH}$ to determine the minimum threshold for the ACK signal of each link. For example, the minimum threshold $T_{ACK}$ for the ACK signal for each link may be computed as follows:

$$T_{ACK_i} = p_{DTX}^i * T_{ACK}^{DTX} + (1 - p_{DTX}^i) * T_{ACK}^{NACK} \tag{3}$$

where

$$T_{ACK}^{DTX} = \Phi^{-1}\left(0.9999, 0, I_{ACK/NACK\,msg}\right) \tag{4}$$

and

$$T_{ACK}^{NACK} = \Phi^{-1}\left(0.9999, -\sqrt{\beta_{NACK} * E_c^{DPCH_i}}, I_{ACK/NACK\,msg}\right) \tag{5}$$

and where $\Phi^{-1}(\cdot)$ is the inverse of the Gaussian cumulative distribution function (CDF) and "·" represents the content of the parentheses in Equations (4) and (5), $\beta_{NACK} * E_c^{DPCH,}$ is the power offset of the NACK signal multiplied by the power level of the DPCH, and $I_{ACK/NACK\,msg}$ is the interference present on the ACK/NACK signal. The last variable, $I_{ACK/NACK\,msg}$, may be derived from the interference on the DPCH, $\hat{I}_{DPCH,}$ in a manner known to those having ordinary skill in the art. Thus, by using Equation (3), the minimum threshold $T_{ACK}$ for the ACK signal of each link may be adjusted based on the probability $p^i_{DTX}$ that a DTX will occur. As a result, the threshold for the ACK signal of each link may be set closer to the first curve 200 in FIGURE 2 where $p^i_{DTX}$ is low.

The minimum threshold $T_{ACK}$ for the ACK signal of each link is thereafter provided to the ACK/NACK detector/ power estimator 316 for detecting the ACK signal. In addition, the ACK/NACK detector/power estimator 316 also determines whether the ACK or NACK signal detected was reliable. In one embodiment, the ACK/NACK detector/power estimator 316 determines the reliability of the ACK or NACK signal by examining the DPCH signal-to-noise ratio, $SIR_{DPCH}$. For example, if the DPCH signal-to-noise ratio is too low, the overall signal quality may be too low for a reliable ACK or NACK signal detection. Therefore, for links that have a DPCH signal-to-noise ratio below a certain threshold, a NACK signal is presumed to be detected.

In some embodiments, the power offsets $\beta_{ACK}$ and $\beta_{NACK}$ of the ACK/NACK signal used in the minimum threshold determination may be provided to the ACK/NACK detector/power estimator 316, for example, in the DPCH from the base station(s). In other embodiments, the ACK/NACK detector/power estimator 316 may estimate the power offsets of the ACK/NACK signal. For the latter case, estimated power offsets $\hat{\beta}_{ACK}^{i,j}$ and $\hat{\beta}_{NACK}^{i,j}$ of the ACK/NACK signal may be derived as follows:

$$\hat{\beta}_{ACK}^{i,j} = \lambda\,\frac{\hat{E}_c^{ACK}(i,j)}{\hat{E}_c^{DPCH}(i,j)} + (1-\lambda)\hat{\beta}_{ACK}^{i,j-1}, \text{if ACK detected} \qquad (6)$$

and

$$\hat{\beta}_{NACK}^{i,j} = \lambda\,\frac{\hat{E}_c^{NACK}(i,j)}{\hat{E}_c^{DPCH}(i,j)} + (1-\lambda)\hat{\beta}_{NACK}^{i,j-1}, \text{if NACK detected and } p_{DTX}^j < 0.3 \qquad (7)$$

where $\hat{\beta}_{ACK}^{i,j}$ and $\hat{\beta}_{NACK}^{i,j}$ are the power offset estimates for the ACK/NACK signal at time instant $j$ for link $i$, and $\lambda$ is a filter coefficient (typically 0.95-0.98).

If the power offsets of the ACK/NACK signal are estimated, the ACK/NACK detector/power estimator 316 then updates itself with the newly estimated power offsets $\hat{\beta}_{ACK}^{i,j}$ and $\hat{\beta}_{NACK}^{i,j}$. Generally, the estimated power offset $\hat{\beta}_{ACK}^{i,j}$ of the detected ACK signal will be updated, but the power offset $\hat{\beta}_{NACK}^{i,j}$ of the detected NACK signal may not be updated, depending on the probability $p^i_{DTX}$ that a DTX will occur. For example, if the probability $p^i_{DTX}$ is too large, no update of the NACK power offset is made.

Thereafter, the ACK/NACK detector/power estimator 316 forwards the detected ACK/NACK signal to the block scheduler 318 to be used for scheduling the next data packet to be transmitted. If the ACK/NACK detector/power estimator 316 detects an ACK signal as a result of the preceding transmission, the block scheduler 318 schedules a new data packet to be transmitted. On the other hand, if a NACK signal was detected, the block scheduler 318 schedules a retransmission of the previous data packet. Transmission is subsequently performed by the front end transmitter 320 in a manner known to those of ordinary skill in the art.

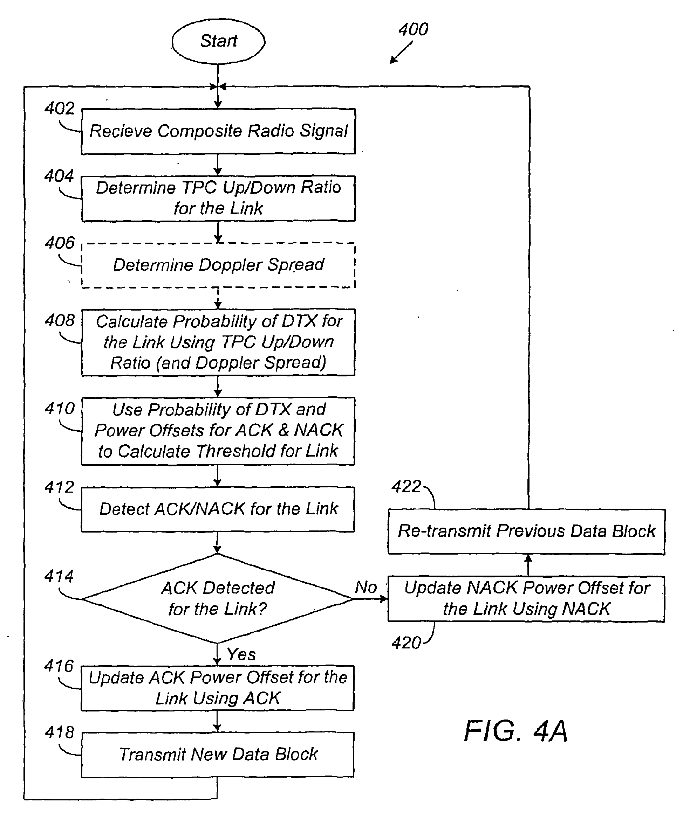

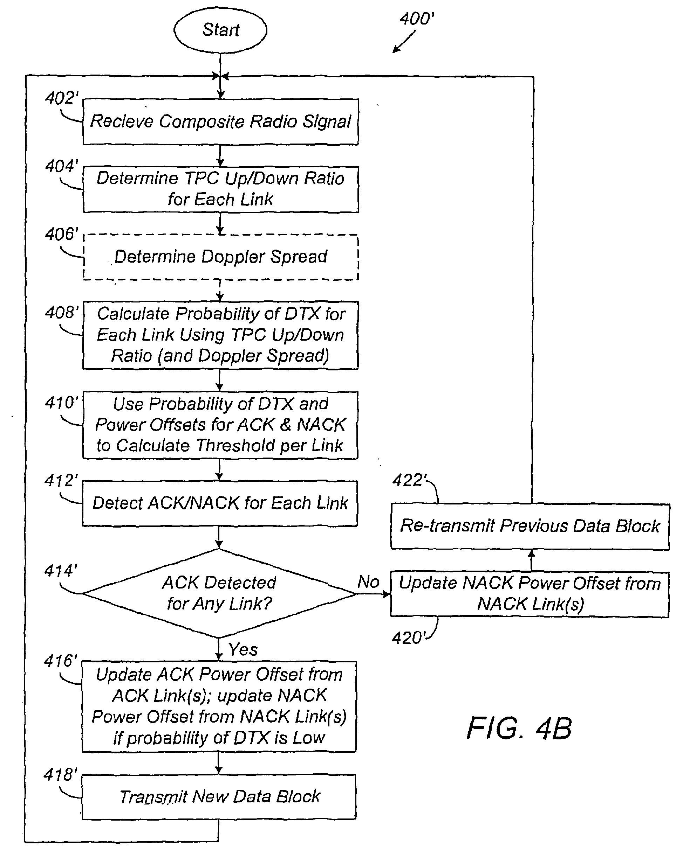

A flow chart 400 for a method that may be used to implement the ACK/NACK signal detection in a mobile terminal according to embodiments of the invention is shown in FIGURE 4A. Although the method 400 is described with respect to only a single base station, it may certainly be used when the mobile terminal is connected to multiple base stations in a soft handover situation (as shown in FIGURE 4B) without departing from the scope of the invention. The method begins at step 402, where the mobile terminal receives a signal from the base station currently connected to the mobile terminal. The mobile terminal thereafter determines the transmit power up/down ratio for the link of the involved base station in the manner described above, at step 404. If the mobile terminal includes a Doppler estimator (hence, the dashed lines), then the Doppler spread for the mobile terminal is determined at step 406. At step 408, the mobile terminal calculates the probability that a DTX will result for the link using the power up/down ratio. Where available, the Doppler spread may be also be used to adjust the probability of the DTX accordingly.

The mobile terminal thereafter uses the probability of the DTX along with the power offset for the ACK/NACK signal to calculate the minimum threshold for the ACK signal of the involved link at step 410. The power offset may be provided to the mobile terminal from the base station, or the mobile terminal may estimate the power offset in the manner described above. At step 412, mobile terminal detects the ACK/NACK signal for the involved link and determines the reliability of the detection. If the detection for the link is not reliable, a NACK signal is presumed. At step 414, a determination is made as to whether an ACK signal was detected for the link. If the answer is yes, the mobile terminal updates the ACK signal power offset for the link using the ACK signal (step 416) and transmits a new data packet (step 418). If the answer is no, the mobile terminal updates the NACK signal power offset for the link using the NACK signal (step 420) and retransmits the previous data packet (step 422).

FIGURE 4B illustrates a flow chart 400' for a method that may be used in the soft handover case to implement the ACK/NACK signal detection in a mobile terminal according to embodiments of the invention. The method 400' is otherwise similar to the method 400 of FIGURE 4A, except that multiple links are involved. The method begins at step 402', where the mobile terminal receives a signal from all the base stations involved in the soft handover (i.e., the active set). The mobile terminal thereafter determines the transmit power up/down ratio for the links of each of the involved base stations in the manner described above, at step 404'. If the mobile terminal includes a Doppler estimator (again, the dashed lines), then the Doppler spread for the mobile terminal is determined at step 406'. At step 408', the mobile terminal calculates the probability $p^i_{DTX}$ that a DTX will result for each link using the power up/down ratio $R_i$. Where available, the Doppler spread may be also be used to adjust the probability $p^i_{DTX}$ accordingly.

The mobile terminal thereafter uses the probability $p^i_{DTX}$ along with the power offsets for the ACK/NACK signal to calculate the minimum threshold for the ACK signal for each link at step 410'. The power offsets may be provided to the mobile terminal from the base stations, or the mobile terminal may estimate the power offsets in the manner described above. At step 412', mobile terminal detects the ACK/NACK signal for each link and determines the reliability of the detection. If the detection for a given link is not reliable, a NACK signal is presumed. At step 414', a determination is made as to whether an ACK signal was detected for any link. If the answer is yes for a link, the mobile terminal updates the ACK signal power offset for the link using the ACK signal at step 416'. The NACK power offset may also be updated at this point using the NACK signal for any link with a low probability of DTX, for example, $p^i_{DTX} < 0.3$. Thereafter, a new data packet is transmitted at step 418'. If the answer is no for a link, the mobile terminal updates the NACK signal power offset for the link using the NACK signal (step 420') and retransmits the previous data packet (step 422').

While the present invention has been described with reference to one or more particular embodiments, those skilled in the art will recognize that many changes may be made thereto without departing from the scope of the present invention which is set forth in the following claims.

## Claims

1.  A method (400, 400') for improving detection of acknowledgment or negative acknowledgment signals in a mobile terminal, comprising:

    receiving (402, 402') a radio signal from a base station connected to said mobile terminal, said radio signal normally including either an acknowledgment signal or a negative acknowledgment signal, or being a discontinuous transmission, DTX;
    estimating (408, 408') the probability of DTX by observing transmit power commands issued to the mobile terminal;
    calculating (410, 410') a minimum acknowledgment signal threshold for said mobile terminal to correctly detect said acknowledgment signal using said probability of said DTX; and
    detecting (412, 412') whether said acknowledgment signal was received or whether a negative acknowledgment signal was received using said minimum acknowledgment signal threshold.

2.  The method according to claim 1, further comprising transmitting to said base station a data packet that corresponds to either said acknowledgment signal or said negative acknowledgment signal being received.

3. The method according to claim 2, wherein said data packet that corresponds to said acknowledgment signal is transmitted only if said received acknowledgment signal is determined to be reliable.

4. The method according to claim 1, further comprising determining a reliability of said detected acknowledgment signal or negative acknowledgment signal.

5. The method according to claim 1, wherein said step of estimating (408, 408') said DTX probability comprises determining a ratio of transmit power up commands versus transmit power down commands received from said base station.

6. The method according to claim 5, wherein said step of estimating (408, 408') said DTX probability further comprises assigning a predetermined probability to said DTX probability if said ratio of transmit power up commands versus transmit power down commands is greater than a predefined value.

7. The method according to claim 1, wherein said step of calculating (410, 410') said acknowledgment signal minimum threshold further uses a power offset of said acknowledgment signal and said negative acknowledgment signal.

8. The method according to claim 7, wherein said power offsets are provided to said mobile terminal from said base station.

9. The method according to claim 7, wherein said power offsets are estimated by said mobile terminal.

10. The method according to claim 8, further comprising updating (416, 420; 416', 420') said mobile terminal with said power offset estimates.

11. The method according to claim 4, wherein said step of determining a reliability of said detected acknowledgment signal or said negative acknowledgment signal is performed using a signal-to-noise ratio of a dedicated physical channel of said radio signal.

12. The method according to claim 11, wherein said step of determining a reliability of said detected acknowledgment signal or said negative acknowledgment signal further includes automatically assuming that said radio signal includes a negative acknowledgment signal if said signal-to-noise ratio is below a predetermined level.

13. The method according to claim 1, further comprising adjusting said probability of said DTX for Doppler spreading.

14. A receiver (300) having improved acknowledgment or negative acknowledgment signal detection in a mobile terminal of a wireless communication system, comprising:

a front end receiver (304) for receiving a radio signal from a base station connected to said mobile terminal, said radio signal normally including either an acknowledgment signal or a negative acknowledgment signal, or being a discontinuous transmission, DTX;
a control unit (312) for estimating the probability of DTX by observing transmit power commands issued to the mobile terminal;
a threshold computation unit (314) for calculating a minimum acknowledgment signal threshold for said mobile terminal to correctly detect said acknowledgment signal using said probability of said DTX; and
a detector unit (316) for detecting whether said acknowledgment signal was received or whether a negative acknowledgment signal was received using said minimum acknowledgment signal threshold.

15. The receiver according to claim 14, further comprising a signal block scheduler (318) for scheduling transmission of a data packet that corresponds to either said acknowledgment signal or said negative acknowledgment signal being received.

16. The receiver according to claim 15, wherein said signal block scheduler (318) is configured to schedule said transmission of a data packet that corresponds to said acknowledgment signal only if said received acknowledgment signal is determined to be reliable.

17. The receiver according to claim 14, wherein said detector unit (316) also determines a reliability of said detected acknowledgment signal or negative acknowledgment signal.

18. The receiver according to claim 14, wherein said control unit (312) is configured to estimate said DTX probability by determining a ratio of transmit power up commands versus transmit power down commands received from said base station.

19. The receiver according to claim 18, wherein said control unit (312) is further configured to assign a predetermined probability to said DTX probability if said ratio of transmit power up commands versus transmit power down commands is greater than a predefined value.

20. The receiver according to claim 14, wherein said the threshold computation unit (314) calculates said acknowledgment signal minimum threshold by further using a power offset of said acknowledgment signal and said negative acknowledgment signal.

21. The receiver according to claim 20, wherein said threshold computation unit (314) receives said power offsets from said base station.

22. The receiver according to claim 20, wherein said threshold computation unit (314) is configured to estimate said power offsets.

23. The receiver according to claim 22, wherein said threshold computation unit (314) is further configured to update said mobile terminal with said power offset estimates.

24. The receiver according to claim 17, wherein said detector unit (316) determines said reliability of said detected acknowledgment signal or said negative acknowledgment signal by using a signal-to-noise ratio of a dedicated physical channel of said radio signal.

25. The receiver according to claim 24, wherein said detector unit (316) is configured to automatically assume that said radio signal includes a negative acknowledgment signal if said signal-to-noise ratio is below a predetermined level.

26. The receiver according to claim 14, wherein said control unit (312) is configured to adjust said probability of said DTX for Doppler spreading.

27. The method (400') according to claim 1, wherein said mobile terminal is connected to multiple base stations, and wherein
the receiving (402') of a radio signal is from said multiple base stations at said mobile terminal, each radio signal normally including either an acknowledgment signal or a negative acknowledgment signal;
the estimating (408') of a probability of a DTX is for each one of said base stations;
the calculating (410') of a minimum acknowledgment signal threshold for said mobile terminal to correctly detect said acknowledgment signal is for each one of said base stations using said probability of a DTX for a respective one of said base stations; and
the detecting (412') is whether said acknowledgment signal was received for each one of said base stations or whether a negative acknowledgment signal was received for each one of said base stations using said minimum acknowledgment signal threshold for a respective one of said base stations.

28. The method according to claim 27, further comprising transmitting to said base stations a data packet that corresponds to either said acknowledgment signal if an acknowledgment signal is received from any one of said base stations, or said negative acknowledgment signal if no acknowledgment signal is received from any one of said base stations.

29. The method according to claim 28, where said step of transmitting a data packet that corresponds to said acknowledgment signal is performed only if said acknowledgment signal received from any one of said base stations is determined to be reliable.

30. The method according to claim 27, further comprising determining a reliability of each detected acknowledgment signal or negative acknowledgment signal received from said base stations.

31. The method according to claim 27, wherein said step of estimating (408') said DTX probability for each one of said base stations comprises determining a ratio of transmit power up commands versus transmit power down commands received from each one of said base stations and assigning a predetermined probability to said DTX probability for each one of said base station if said ratio of transmit power up commands versus transmit power down commands is greater than a predefined value for a respective one of said base stations.

32. The method according to claim 27, wherein said step of calculating (410') said acknowledgment signal minimum threshold for each one of said base stations further uses a power offset of said acknowledgment signal and said negative acknowledgment signal, said power offsets provided to said mobile terminal from a respective one of said base stations.

33. The method according to claim 27, wherein said step of calculating (410') said acknowledgment signal minimum threshold for each one of said base stations further uses a power offset of said acknowledgment signal and said negative acknowledgment signal, wherein said power offsets are estimated by said mobile terminal, and wherein said mobile terminal is updated (416', 420') with said power offset estimates.

34. The method according to claim 30; wherein said step of determining a reliability of said detected acknowledgment signal or said negative acknowledgment signal for each one of said base stations is performed using a signal-to-noise ratio of a dedicated physical channel of a radio signal from a respective one of said base stations and further includes automatically assuming that said radio signal from a respective one of said base stations includes a negative acknowledgment signal if said signal-to-noise ratio is below a predetermined level.

**Patentansprüche**

1. Verfahren (400, 400') zur Verbesserung der Erkennung von Bestätigungs- oder Negativ-Bestätigungssignalen in einem mobilen Endgerät, umfassend:

Empfangen (402, 402') eines Funksignals von einer Basisstation, die mit dem mobilen Endgerät verbunden ist, wobei das Funksignal normalerweise entweder ein Bestätigungssignal oder ein Negativ-Bestätigungssignal umfasst oder eine nichtkontinuierliche Übertragung DTX ist;
Schätzen (408, 408') der Wahrscheinlichkeit einer DTX durch Beobachten von Sendeleistungsbefehlen, die vom mobilen Endgerät ausgegeben werden;
Berechnen (410, 410') unter Verwendung der Wahrscheinlichkeit der DTX einer Bestätigungssignal-Mindestschwelle für das mobile Endgerät, um das Bestätigungssignal korrekt zu erkennen; und
Erkennen (412, 412'), ob das Bestätigungssignal empfangen wurde oder ob ein Negativ-Bestätigungssignal empfangen wurde, unter Verwendung der Bestätigungssignal-Mindestschwelle.

2. Verfahren nach Anspruch 1, ferner umfassend ein Senden eines Datenpakets, das entweder dem Bestätigungssignal oder dem Negativ-Bestätigungssignal, das empfangen wird, entspricht, an die Basisstation.

3. Verfahren nach Anspruch 2, wobei das Datenpaket, das dem Bestätigungssignal entspricht, nur dann übertragen wird, wenn bestimmt wird, dass das empfangene Bestätigungssignal zuverlässig ist.

4. Verfahren nach Anspruch 1, ferner umfassend ein Bestimmen einer Zuverlässigkeit des erkannten Bestätigungssignals oder Negativ-Bestätigungssignals.

5. Verfahren nach Anspruch 1, wobei der Schritt des Schätzens (408, 408') der DTX-Wahrscheinlichkeit ein Bestimmen eines Verhältnisses von Sendeleistung-Ein-Befehlen zu Sendeleistung-Aus-Befehlen umfasst, die von der Basisstation empfangen werden.

6. Verfahren nach Anspruch 5, wobei der Schritt des Schätzens (408, 408') der DTX-Wahrscheinlichkeit ferner ein Zuordnen einer vorbestimmten Wahrscheinlichkeit zur DTX-Wahrscheinlichkeit umfasst, wenn das Verhältnis von Sendeleistung-Ein-Befehlen zu Sendeleistung-Aus-Befehlen größer als ein vordefinierter Wert ist.

7. Verfahren nach Anspruch 1, wobei der Schritt des Berechnens (410, 410') der Bestätigungssignal-Mindestschwelle ferner einen Leistungsoffset des Bestätigungssignals und des Negativ-Bestätigungssignals verwendet.

8. Verfahren nach Anspruch 7, wobei die Leistungsoffsets dem mobilen Endgerät von der Basisstation bereitgestellt werden.

9. Verfahren nach Anspruch 7, wobei die Leistungsoffsets durch das mobile Endgerät geschätzt werden.

**10.** Verfahren nach Anspruch 8, ferner umfassend ein Aktualisieren (416, 420; 416', 420') des mobilen Endgeräts mit den Leistungsoffsetschätzungen.

**11.** Verfahren nach Anspruch 4, wobei der Schritt des Bestimmens einer Zuverlässigkeit des erkannten Bestätigungssignals oder des Negativ-Bestätigungssignals unter Verwendung eines Signal-Rausch-Verhältnisses eines dedizierten physikalischen Kanals des Funksignals ausgeführt wird.

**12.** Verfahren nach Anspruch 11, wobei der Schritt des Bestimmens einer Zuverlässigkeit des erkannten Bestätigungssignals oder des Negativ-Bestätigungssignals ferner ein automatisches Annehmen umfasst, dass das Funksignal ein Negativ-Bestätigungssignal umfasst, wenn das Signal-Rausch-Verhältnis unter einem vorbestimmten Pegel ist.

**13.** Verfahren nach Anspruch 1, ferner umfassend ein Anpassen der Wahrscheinlichkeit der DTX für Doppler-Verbreiterung.

**14.** Empfänger (300) mit verbesserter Erkennung von Bestätigungs- oder Negativ-Bestätigungssignalen in einem mobilen Endgerät eines drahtlosen Kommunikationssystems, umfassend:

einen Front-End-Empfänger (304) zum Empfangen eines Funksignals von einer Basisstation, die mit dem mobilen Endgerät verbunden ist, wobei das Funksignal normalerweise entweder ein Bestätigungssignal oder ein Negativ-Bestätigungssignal umfasst oder eine nichtkontinuierliche Übertragung DTX ist;
eine Steuereinheit (312) zum Schätzen der Wahrscheinlichkeit einer DTX durch Beobachten von Sendeleistungsbefehlen, die vom mobilen Endgerät ausgegeben werden;
eine Schwellenberechnungseinheit (314) zum Berechnen einer Bestätigungssignal-Mindestschwelle für das mobile Endgerät unter Verwendung der Wahrscheinlichkeit der DTX, um das Bestätigungssignal korrekt zu erkennen; und
eine Detektoreinheit (316) zum Erkennen, ob das Bestätigungssignal empfangen wurde oder ob ein Negativ-Bestätigungssignal empfangen wurde, unter Verwendung der Bestätigungssignal-Mindestschwelle.

**15.** Empfänger nach Anspruch 14, ferner umfassend einen Signalblock-Scheduler (318) zum Disponieren der Übertragung eines Datenpakets, das entweder dem Bestätigungssignal oder dem Negativ-Bestätigungssignal, das empfangen wird, entspricht.

**16.** Empfänger nach Anspruch 15, wobei der Signalblock-Scheduler (318) so konfiguriert ist, dass er die Übertragung eines Datenpakets, das dem Bestätigungssignal entspricht, nur dann disponiert, wenn bestimmt wird, dass das empfangene Bestätigungssignal zuverlässig ist.

**17.** Empfänger nach Anspruch 14, wobei die Detektoreinheit (316) außerdem eine Zuverlässigkeit des erkannten Bestätigungssignals oder Negativ-Bestätigungssignals bestimmt.

**18.** Empfänger nach Anspruch 14, wobei die Steuereinheit (312) so konfiguriert ist, dass sie die DTX-Wahrscheinlichkeit durch Bestimmen eines Verhältnisses von Sendeleistung-Ein-Befehlen zu Sendeleistung-Aus-Befehlen schätzt, die von der Basisstation empfangen werden.

**19.** Empfänger nach Anspruch 18, wobei die Steuereinheit (312) ferner so konfiguriert ist, dass sie der DTX-Wahrscheinlichkeit eine vorbestimmte Wahrscheinlichkeit zuordnet, wenn das Verhältnis von Sendeleistung-Ein-Befehlen zu Sendeleistung-Aus-Befehlen größer als ein vordefinierter Wert ist.

**20.** Empfänger nach Anspruch 14, wobei die Schwellenberechnungseinheit (314) die Bestätigungssignal-Mindestschwelle ferner durch Verwenden eines Leistungsoffsets des Bestätigungssignals und des Negativ-Bestätigungssignals berechnet.

**21.** Empfänger nach Anspruch 20, wobei die Schwellenberechnungseinheit (314) die Leistungsoffsets von der Basisstation empfängt.

**22.** Empfänger nach Anspruch 20, wobei die Schwellenberechnungseinheit (314) so konfiguriert ist, dass sie die Leistungsoffsets schätzt.

**23.** Empfänger nach Anspruch 22, wobei die Schwellenberechnungseinheit (314) ferner so konfiguriert ist, dass sie das mobile Endgerät mit den Leistungsoffsets aktualisiert.

24. Empfänger nach Anspruch 17, wobei die Detektoreinheit die Zuverlässigkeit des erkannten Bestätigungssignals oder des Negativ-Bestätigungssignals durch Verwenden eines Signal-Rausch-Verhältnisses eines dedizierten physikalischen Kanals des Funksignals bestimmt.

25. Empfänger nach Anspruch 24, wobei die Detektoreinheit (316) so konfiguriert ist, dass sie automatisch annimmt, dass das Funksignal ein Negativ-Bestätigungssignal umfasst, wenn das Signal-Rausch-Verhältnis unter einem vorbestimmten Pegel ist.

26. Empfänger nach Anspruch 14, wobei die Steuereinheit (312) so konfiguriert ist, dass sie die Wahrscheinlichkeit der DTX für Doppler-Verbreiterung anpasst.

27. Verfahren (400') nach Anspruch 1, wobei das mobile Endgerät mit mehreren Basisstationen verbunden ist, und wobei das Empfangen (402') eines Funksignal von den mehreren Basisstationen am mobilen Endgerät erfolgt, wobei jedes Funksignal normalerweise entweder ein Bestätigungssignal oder ein Negativ-Bestätigungssignal umfasst;
das Schätzen (408') einer Wahrscheinlichkeit eines DTX für jede der Basisstationen erfolgt;
das Berechnen (410') einer Bestätigungssignal-Mindestschwelle für das mobile Endgerät zum korrekten Erkennen des Bestätigungssignals für jede der Basisstationen unter Verwendung der Wahrscheinlichkeit einer DTX für eine jeweilige der Basisstationen erfolgt; und
das Erkennen (412'), ob das Bestätigungssignal für jede der Basisstationen empfangen wurde oder ob ein Negativ-Bestätigungssignal für jede der Basisstationen empfangen wurde, unter Verwendung der Bestätigungssignal-Mindestschwelle für eine jeweilige der Basisstationen erfolgt.

28. Verfahren nach Anspruch 27, ferner umfassend ein Übertragen an die Basisstationen eines Datenpakets, das entweder dem Bestätigungssignal, wenn ein Bestätigungssignal von einer beliebigen der Basisstationen empfangen wird, oder dem Negativ-Bestätigungssignal entspricht, wenn kein Bestätigungssignal von einer beliebigen der Basisstationen empfangen wird.

29. Verfahren nach Anspruch 28, wobei der Schritt des Übertragens eines Datenpakets, das dem Bestätigungssignal entspricht, nur dann ausgeführt wird, wenn bestimmt wird, dass das von einer beliebigen der Basisstationen empfangene Bestätigungssignal zuverlässig ist.

30. Verfahren nach Anspruch 27, ferner umfassend ein Bestimmen einer Zuverlässigkeit jedes erkannten Bestätigungssignals oder Negativ-Bestätigungssignals, das von den Basisstationen empfangen wird.

31. Verfahren nach Anspruch 27, wobei der Schritt des Schätzens (408') der DTX-Wahrscheinlichkeit für jede des Basisstationen ein Bestimmen eines Verhältnisses von Sendeleistung-Ein-Befehlen zu Sendeleistung-Aus-Befehlen, die von jeder der Basisstationen empfangen werden, und Zuordnen einer vorbestimmten Wahrscheinlichkeit zur DTX-Wahrscheinlichkeit für jede der Basisstationen umfasst, wenn das Verhältnis von Sendeleistung-Ein-Befehlen zu Sendeleistung-Aus-Befehlen für eine jeweilige der Basisstationen größer als ein vordefinierter Wert ist.

32. Verfahren nach Anspruch 27, wobei der Schritt des Berechnens (410') der Bestätigungssignal-Mindestschwelle für jede der Basisstationen ferner einen Leistungsoffset des Bestätigungssignals und des Negativ-Bestätigungssignals verwendet, wobei die Leistungsoffsets dem mobilen Endgerät von einer jeweiligen der Basisstationen bereitgestellt werden.

33. Verfahren nach Anspruch 27, wobei der Schritt des Berechnens (410') der Bestätigungssignal-Mindestschwelle für jede der Basisstationen ferner einen Leistungsoffset des Bestätigungssignals und des Negativ-Bestätigungssignals verwendet, wobei die Leistungsoffsets durch das mobile Endgerät geschätzt werden, und wobei das mobile Endgerät mit den Leistungsoffsetschätzungen aktualisiert wird (416', 420').

34. Verfahren nach Anspruch 30, wobei der Schritt des Bestimmens einer Zuverlässigkeit des erkannten Bestätigungssignals oder des Negativ-Bestätigungssignals für jede der Basisstationen unter Verwendung eines Signal-Rausch-Verhältnisses eines dedizierten physikalischen Kanals eines Funksignals von einer jeweiligen der Basisstationen ausgeführt wird und ferner ein automatisches Annehmen umfasst, dass das Funksignal von einer jeweiligen der Basisstationen ein Negativ-Bestätigungssignal umfasst, wenn das Signal-Rausch-Verhältnis unter einem vorbestimmten Pegel ist.

**Revendications**

1.  Procédé (400,400') d'amélioration de la détection de signaux d'accusé de réception ou d'accusé de réception négatif dans un terminal mobile, comprenant de :

    recevoir (402,402') un signal radio provenant d'une station de base connectée audit terminal mobile, ledit signal radio incluant normalement soit un signal d'accusé de réception, soit un signal d'accusé de réception négatif, ou étant une transmission discontinue, DTX ;
    estimer (408,408') la probabilité de DTX en observant des commandes de puissance d'émission émises vers le terminal mobile ;
    calculer (410,410') un seuil minimal de signal d'accusé de réception pour ledit terminal mobile afin de détecter correctement ledit signal d'accusé de réception en utilisant ladite probabilité de DTX ; et
    détecter (412,412') si ledit signal d'accusé de réception a été reçu ou si un signal d'accusé de réception négatif a été reçu en utilisant ledit seuil minimal de signal d'accusé de réception.

2.  Procédé selon la revendication 1, comprenant en outre de transmettre à ladite station de base un paquet de données qui correspond soit audit signal d'accusé de réception, soit audit signal d'accusé de réception négatif étant reçu.

3.  Procédé selon la revendication 2, dans lequel ledit paquet de données qui correspond audit signal d'accusé de réception est transmis seulement si ledit signal d'accusé de réception reçu est déterminé fiable.

4.  Procédé selon la revendication 1, comprenant en outre de déterminer une fiabilité dudit signal d'accusé de réception ou signal d'accusé de réception négatif détecté.

5.  Procédé selon la revendication 1, dans lequel ladite étape d'estimation (408,408') de ladite probabilité de DTX comprend de déterminer un rapport de commandes de mise en service d'émission par rapport aux commandes de mise hors service d'émission reçues depuis ladite station de base.

6.  Procédé selon la revendication 5, dans lequel ladite étape d'estimation (408,408') de ladite probabilité de DTX comprend en outre d'assigner une probabilité prédéterminée à ladite probabilité de DTX si ledit rapport de commandes de mise en service d'émission par rapport aux commandes de mise hors service d'émission est supérieur à une valeur prédéfinie.

7.  Procédé selon la revendication1, dans lequel ladite étape de calcul (410,410') dudit seuil minimal de signal d'accusé de réception utilise un décalage de puissance dudit signal d'accusé de réception et dudit signal d'accusé de réception négatif.

8.  Procédé selon la revendication 7, dans lequel lesdits décalages de puissance sont fournis audit terminal mobile depuis ladite station de base.

9.  Procédé selon la revendication 7, dans lequel lesdits décalages de puissance sont estimés pat ledit terminal mobile.

10. Procédé selon la revendication 8, comprenant en outre de mettre à jour (416,420 ;416',420') ledit terminal mobile avec lesdites estimations de décalage de puissance.

11. Procédé selon la revendication 4, dans lequel ladite étape de détermination d'une fiabilité dudit signal d'accusé de réception ou dudit signal d'accusé de réception négatif détecté est effectuée en utilisant un rapport signal sur bruit d'un canal physique dédié dudit signal radio.

12. Procédé selon la revendication 11, dans lequel ladite étape de détermination d'une fiabilité dudit signal d'accusé de réception ou dudit signal d'accusé de réception négatif détecté comprend en outre de postuler automatiquement que ledit signal radio inclut un signal d'accusé de réception négatif si ledit rapport signal sur bruit est inférieur à un seuil prédéterminé.

13. Procédé selon la revendication 1, comprenant en outre d'ajuster ladite probabilité dudit DTX pour un étalement Doppler.

14. Récepteur (300) ayant une détection améliorée de signal d'accusé de réception ou de signal d'accusé de réception négatif dans un terminal mobile d'un système de communication sans fil, comprenant :

un récepteur frontal (304) pour recevoir un signal radio provenant d'une station de base connectée audit terminal mobile, ledit signal radio incluant normalement soit un signal d'accusé de réception, soit un signal d'accusé de réception négatif, ou étant une transmission discontinue, DTX ;

une unité de commande (312) pour estimer la probabilité de DTX en observant les commandes de puissance d'émission émises vers le terminal mobile ;

une unité de calcul informatique de seuil (314) pour calculer un seuil minimal de signal d'accusé de réception pour ledit terminal mobile afin de détecter correctement ledit signal d'accusé de réception en utilisant ladite probabilité de DTX ; et

une unité de détecteur (316) pour détecter si ledit signal d'accusé de réception a été reçu ou si un signal d'accusé de réception négatif a été reçu en utilisant ledit seuil minimal de signal d'accusé de réception.

15. Récepteur selon la revendication 14, comprenant en outre un programmateur de bloc de signal (318) pour programmer une transmission d'un paquet de données qui correspond soit audit signal d'accusé de réception, soit audit signal d'accusé de réception négatif étant reçu.

16. Récepteur selon la revendication 15, dans lequel ledit programmateur de bloc de signal (318) est configuré afin de programmer ladite transmission d'un paquet de données qui correspond audit signal d'accusé de réception seulement si ledit signal d'accusé de réception reçu est déterminé fiable.

17. Récepteur selon la revendication 14, dans lequel ladite unité de détecteur (316) détermine aussi une fiabilité dudit signal d'accusé de réception détecté ou signal d'accusé de réception négatif.

18. Récepteur selon la revendication 14, dans lequel ladite unité de commande (312) est configurée afin d'estimer ladite probabilité de DTX en déterminant un rapport de commandes de mise en service d'émission par rapport aux commandes de mise hors service d'émission reçues depuis ladite station de base.

19. Récepteur selon la revendication 18, dans lequel ladite unité de commande (312) est en outre configurée afin d'assigner une probabilité prédéterminée si ledit rapport des commandes de mise en service d'émission par rapport aux commandes de mise hors service d'émission est supérieur à une valeur prédéfinie.

20. Récepteur selon la revendication 14, dans lequel ladite unité de calcul informatique de seuil (314) calcule ledit seuil minimal de signal d'accusé de réception en utilisant en outre un décalage de puissance dudit signal d'accusé de réception et dudit signal d'accusé de réception négatif.

21. Récepteur selon la revendication 20, dans lequel ladite unité de calcul informatique de seuil (314) reçoit lesdits décalages de puissance provenant de ladite station de base.

22. Récepteur selon la revendication 20, dans lequel ladite unité de calcul informatique de seuil (314) est configurée afin d'estimer lesdits décalages de puissance.

23. Récepteur selon la revendication 22, dans lequel ladite unité de calcul informatique de seuil (314) est en outre configurée afin de mettre à jour ledit terminal mobile avec lesdites estimations de décalage de puissance.

24. Récepteur selon la revendication 17, dans lequel ladite unité de détecteur (316) détermine ladite fiabilité dudit signal d'accusé de réception ou dudit signal d'accusé de réception négatif détecté en utilisant un rapport signal sur bruit d'un canal physique dédié dudit signal radio.

25. Récepteur selon la revendication 24, dans lequel ladite unité de détecteur (316) est configurée afin de postuler automatiquement que ledit signal radio inclut un signal d'accusé de réception négatif si ledit rapport signal sur bruit est inférieur à un niveau prédéterminé.

26. Récepteur selon la revendication 14, dans lequel ladite unité de commande (312) est configurée afin d'ajuster ladite probabilité de ladite DTX pour un étalement Doppler.

27. Procédé (400') selon la revendication 1, dans lequel ledit terminal mobile est connecté à des stations de base multiples, et dans lequel

la réception (402') d'un signal radio se fait à partir desdites stations de base multiples au niveau dudit terminal radio, chaque signal radio incluant normalement soit un signal d'accusé de réception, soit un signal d'accusé de réception négatif ;

l'estimation (408') d'une probabilité d'une DTX se fait pour chacune desdites stations de base ;

le calcul (410') d'un seuil minimal de signal d'accusé de réception pour ledit terminal mobile afin de détecter correctement ledit signal d'accusé de réception pour chacune desdites stations de base en utilisant la probabilité d'une DTX pour une station de base respective desdites stations de base ; et

la détection (412') porte sur le fait soit que ledit signal d'accusé de réception a été reçu pour chacune desdites stations de base, soit qu'un signal d'accusé de réception négatif a été reçu pour chacune desdites stations de base en utilisant ledit seuil minimal de signal d'accusé de réception pour une station de base respective desdites stations de base.

28. Procédé selon la revendication 27, comprenant en outre de transmettre auxdites stations de base un paquet de données qui correspond soit audit signal d'accusé de réception si un signal d'accusé de réception est reçu depuis n'importe laquelle desdites stations de base, soit audit signal d'accusé de réception négatif si aucun signal d'accusé de réception n'est reçu depuis n'importe laquelle desdites stations de base.

29. Procédé selon la revendication 28, dans lequel ladite étape de transmission d'un paquet de données qui correspond audit signal d'accusé de réception est effectuée seulement si ledit signal d'accusé de réception reçu depuis n'importe laquelle desdites stations de base est déterminé fiable.

30. Procédé selon la revendication 27, comprenant en outre de déterminer une fiabilité de chaque signal d'accusé de réception ou signal d'accusé de réception négatif détecté reçu depuis lesdites stations de base.

31. Procédé selon la revendication 27, dans lequel ladite étape d'estimation (408') de ladite probabilité de DTX pour chacune desdites stations de base comprend de déterminer un rapport de commandes de mise en service d'émission par rapport à des commandes de mise hors service d'émission reçues depuis chacune desdites stations de base et d'assigner une probabilité prédéterminée à ladite probabilité de DTX pour chacune desdites stations de base si ledit rapport des commandes de mise en service d'émission par rapport aux commandes de mise hors service d'émission est supérieur à une valeur prédéfinie pour une station de base respective desdites stations de base.

32. Procédé selon la revendication 27, dans lequel ladite étape de calcul (410') dudit seuil minimal de signal d'accusé de réception pour chacune desdites stations de base utilise en outre un décalage de puissance dudit signal d'accusé de réception et dudit signal d'accusé de réception négatif, lesdits décalages de puissance étant fournis audit terminal mobile depuis une station de base respective desdites stations de base.

33. Procédé selon la revendication 27, dans lequel ladite étape de calcul (410') dudit seuil minimal de signal d'accusé de réception pour chacune desdites stations de base utilise en outre un décalage de puissance dudit signal d'accusé de réception et dudit signal d'accusé de réception négatif, dans lequel lesdits décalages de puissance sont estimés par ledit terminal mobile, et dans lequel ledit terminal mobile est mis à jour (416' ;420') avec lesdites estimations de décalage de puissance.

34. Procédé selon la revendication 30, dans lequel ladite étape de détermination d'une fiabilité dudit signal d'accusé de réception détecté ou dudit signal d'accusé de réception négatif pour chacune desdites stations de base est effectuée en utilisant un rapport signal sur bruit d'un canal physique dédié d'un signal radio provenant d'une station de base respective desdites stations de base et inclut en outre de postuler automatiquement que ledit signal radio provenant d'une station de base respective desdites stations de base inclut un signal d'accusé de réception négatif si ledit rapport signal sur bruit est inférieur à un niveau prédéterminé.

FIG. 1

NACK    DTX                    ACK

·Y      ·0                      X

(Signal Amplitude)

FIG. 2A

_____ Thres. given NACK = $DPCH_{EC}$ - 6dB

_ _ _ Thres. given DTX (= 0)

P(ACK|ACK)

200

202

ACK SNR (dB) (ACK=$DPCH_{EC}$ + 6 dB).

FIG. 2B

To Front End
Transmitter

| TPC Detector | | Control Unit |

310 $\quad \hat{H}_i,...\hat{H}_{n_{h_i}}$ /
$SIR^i_{DPCH}$

Power
Up/Down

312 $\quad p^i_{DTX}$

300

| Channel Estimator/ | $SIR^i_{DPCH}$ | Threshold |
| SIR Estimator | | Computation |

$\hat{\beta}^i_{ACK}, \hat{\beta}^i_{NACK}$

308 $\quad \hat{H}_i,...\hat{H}_{n_{h_i}}$ /
$SIR^i_{DPCH}$

314 $\quad T_{ACK_i}$

Other
DL Data

| Front End | | RAKE | | ACK/NACK |
| Receiver | | | | Detector/Power |
| | | | | Estimator |

302

304

306

$\hat{\beta}_{ACK}$ / $\hat{\beta}_{NACK}$

Further
Processing

316 $\quad$ ACK/NACK

| Front End | | Block | E-UL |
| Transmitter | | Scheduler | Blocks |

320

318

Power Up/Down
From TPC

FIG. 3

19

*400*

```
                    ( Start )
                        |
                        v
402  +------------------------------------+
  \--| Recieve Composite Radio Signal     |
     +------------------------------------+
                        |
                        v
404  +------------------------------------+
  \--| Determine TPC Up/Down Ratio        |
     | for the Link                       |
     +------------------------------------+
                        |
                        v
406  +- - - - - - - - - - - - - - - - - -+
  \--| Determine Doppler Spread          |
     +- - - - - - - - - - - - - - - - - -+
                        |
                        v
408  +------------------------------------+
  \--| Calculate Probability of DTX for   |
     | the Link Using TPC Up/Down         |
     | Ratio (and Doppler Spread)         |
     +------------------------------------+
                        |
                        v
410  +------------------------------------+
  \--| Use Probability of DTX and         |
     | Power Offsets for ACK & NACK       |
     | to Calculate Threshold for Link    |
     +------------------------------------+
                        |
                        v
412  +------------------------------------+
  \--| Detect ACK/NACK for the Link       |
     +------------------------------------+
                        |
                        v
414        /\                          422 +------------------------------+
  \-----  /  \     ACK Detected    No     | Re-transmit Previous Data Block|
         <    >    for the Link?  ------>  +------------------------------+
          \  /                                        ^
           \/                                         |
            | Yes                        420 +------------------------------+
416  +------------------------------+  \--| Update NACK Power Offset for   |
  \--| Update ACK Power Offset for the|   | the Link Using NACK           |
     | Link Using ACK               |     +------------------------------+
     +------------------------------+
            |
            v
418  +------------------------------+
  \--| Transmit New Data Block      |
     +------------------------------+
```

*FIG. 4A*

Start

400'

402'
Recieve Composite Radio Signal

404'
Determine TPC Up/Down Ratio
for Each Link

406'
Determine Doppler Spread

408'
Calculate Probability of DTX for
Each Link Using TPC Up/Down
Ratio (and Doppler Spread)

410'
Use Probability of DTX and
Power Offsets for ACK & NACK
to Calculate Threshold per Link

412'
Detect ACK/NACK for Each Link

414'
ACK Detected
for Any Link?

No

422'
Re-transmit Previous Data Block

420'
Update NACK Power Offset from
NACK Link(s)

Yes

416'
Update ACK Power Offset from
ACK Link(s); update NACK
Power Offset from NACK Link(s)
if probability of DTX is Low

418'
Transmit New Data Block

FIG. 4B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1326361 A